# FASCICULE DE BREVET EUROPEEN

(11) **EP 2 078 643 B1**
(45) Date de publication et mention de la délivrance du brevet: **18.04.2012**
(21) Numéro de dépôt: 08171709.2
(22) Date de dépôt: 15.12.2008
(51) Int. Cl.: B60R 19/26

(54) **Volet hybride arrière de véhicule automobile**
Hybridheckklappe eines Kraftfahrzeuges
Rear hybride shutter of an automobile

(30) Priorité: 09.01.2008 FR 0850101
(43) Date de publication de la demande: 15.07.2009
(73) Titulaire: Peugeot Citroën Automobiles SA, 78943 Vélizy-Villacoublay Cedex (FR)
(72) Inventeur: Pezeril, Stéphane, 92310, SEVRES (FR)
(74) Mandataire: Fernandez, Francis Lionel

(56) Documents cités:
- EP-A- 0 949 092
- DE-A1- 2 456 416
- GB-A- 2 344 794
- US-A- 4 272 114
- US-B1- 6 199 937

## Description

La présente invention concerne un volet hybride arrière d'un véhicule automobile.

Il est appelé volet hybride tout volet principalement conçu en une matière autre que métallique, par exemple en matière plastique avec, le cas échéant, des matériaux d'ajout.

Il est connu d'équiper un tel volet hybride d'un dispositif d'absorption de choc. En général, ce dispositif comprend un bandeau de réparabilité, autrement appelé peau, recouvrant une armature à qui on adjoint des éléments additionnels de renfort pour son maintien au choc. Ces trois parties sont distinctes et les éléments additionnels de renfort servent aussi d'absorbeur de choc.

Si pour des raisons de compacité et de simplification du système d'absorption et surtout afin de renforcer la tenue d'un tel volet, le regroupement de la fonction de renfort avec la fonction d'armature dans une seule pièce est très souhaitable, ceci se heurte à un problème de tenue de cette pièce unique au choc. En effet, une telle pièce, étant donné que le renfort sert aussi d'absorbeurs de chocs, serait susceptible d'être souvent endommagée ce qui n'est pas acceptable, cette pièce ayant un coût de fabrication assez élevé.

Divers systèmes d'absorption de choc, disposés entre le bandeau de réparabilité et un élément de renfort d'un dispositif d'absorption de chocs sont connus de l'état de la technique.

Le document EP-B-1 454 799 décrit un pare-choc avant présentant entre son bandeau de réparabilité et une poutre allongée de pare-choc un matériau compressible en mousse absorbeur d'énergie, ce matériau, étant comprimé lors d'un choc et assurant ainsi l'absorption d'énergie. Cependant, dans ce document, la problématique spécifique à un volet hybride arrière n'est pas évoquée, étant donné que ce document est relatif à un pare-choc avant de véhicule.

Le document US-A-4 050 726 présente un dispositif d'absorption de choc, avec, dans un mode de réalisation, un absorbeur à étages présentant des zones de moins en moins larges, la plus large de ces zones étant sollicitée en dernier. Ainsi, une zone de cet absorbeur peut se déformer sans que la suivante ne le soit. Le problème traité par ce document n'est pas en relation avec un volet hybride arrière de véhicule mais concerne plutôt le maintien d'une absorption constante de l'absorbeur sur une large gamme de températures.

Le document US-A- 6 199 937 présente un pare-choc avec un absorbeur de choc placé entre la poutre et le bandeau, préférentiellement vers les extrémités de ceux-ci. L'absorbeur présente une extrémité fermée pointant en direction du bandeau et une extrémité ouverte dirigée vers la poutre et plus large que celle fermée ainsi qu'une cavité interne afin de permettre d'absorber l'énergie d'un choc sur le pare-choc. Là encore, il n'y a aucune indication qu'un tel absorbeur pourrait trouver une utilisation dans un dispositif d'absorption de choc pour un volet hybride arrière.

Un autre exemple de pare-choc est divulgué par le document EP-0 949 092 A

Le problème de la présente invention est de concevoir un volet arrière de type hybride d'un véhicule automobile présentant une pièce servant d'armature de ce dispositif en même temps que de renfort, cette pièce devant être particulièrement protégée dans le dispositif pour ne pas être fréquemment endommagée.

A cet effet, l'invention a pour objet un dispositif d'absorption de choc pour un volet arrière hybride, présentant un bandeau réparabilité formant la partie externe de ce dispositif, au moins un élément de renfort et une armature de volet fixée vers la partie inférieure de ce volet, caractérisé en ce que l'élément de renfort et l'armature forment une pièce unique, au moins un élément d'absorption étant disposé entre cette pièce et le bandeau de réparabilité.

Selon des caractéristiques additionnelles de la présente invention :
- l'élément d'absorption est fixé de manière amovible sur la pièce unique formant armature et renfort à une de ses extrémités, l'autre extrémité opposée pointant vers le bandeau,
- l'élément d'absorption est en matière déformable, notamment en plastique ou en caoutchouc,
- la capacité d'absorption de choc de l'élément d'absorption croît au fur et à mesure de son enfoncement lors d'un choc,
- l'élément d'absorption est constitué de plusieurs parties superposées, les dimensions de ces parties diminuant en s'éloignant de la pièce commune,
- les parties superposées sont de section rectangulaire ou circulaire,
- les parties superposées sont au nombre de trois,
- le bandeau de réparabilité, s'écarte en direction longitudinale du véhicule, de la pièce unique formant armature et renfort, quand celle-ci porte l'élément d'absorption,
- au moins un élément d'absorption est disposé à la partie inférieure de la pièce unique formant armature et renfort,
- il est fixé de manière amovible sur le volet.

L'invention concerne également un volet hybride arrière de véhicule automobile, comportant vers sa partie inférieure un dispositif d'absorption de choc.

L'invention va maintenant être décrite plus en détail mais de façon non limitative en regard des figures annexées, dans lesquelles :
- la figure 1 est une représentation schématique d'une vue de côté arrière en perspective d'un volet arrière de véhicule automobile avec un tronçon du dispositif d'absorption afin de mieux voir les éléments le composant, ce dispositif étant conforme à la présente invention,
- la figure 2 est une représentation schématique, agrandie par rapport à la figure 1, d'une section du dispositif d'absorption conformément à la présente invention,
- la figure 3 est une représentation schématique, agrandie par rapport à la figure 1, d'une vue en perspective du tronçon du dispositif conforme à la présente invention.

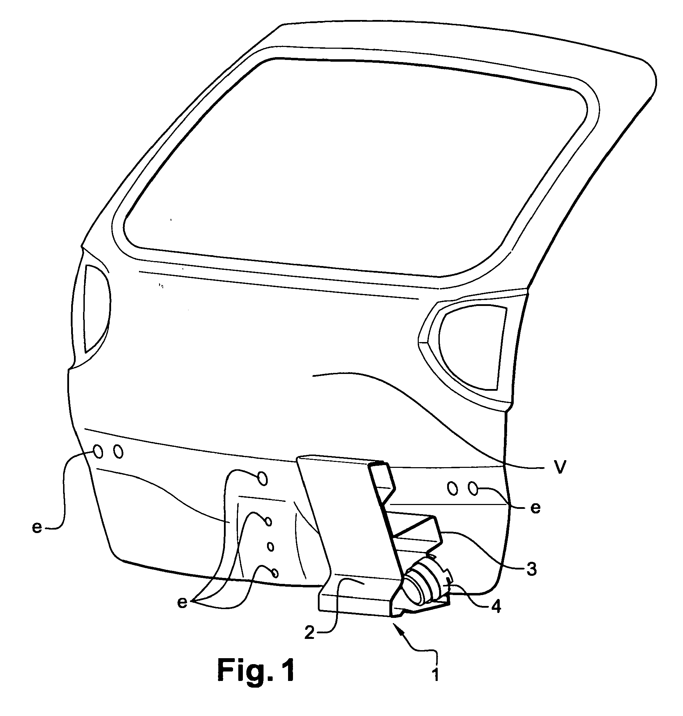

La figure 1 montre un volet V hybride arrière de véhicule automobile. Ce volet V porte vers sa partie inférieure sur toute sa longueur un dispositif d'absorption 1 de choc, conforme à la présente invention, dont seul un tronçon est représenté à la figure 1 pour une meilleure vision des éléments le composant.

Ce dispositif 1 est préférentiellement fixé à la partie inférieure du volet V de manière amovible et, sur la figure, plusieurs évidements e sont prévus pour sa fixation. Cette fixation peut se faire avantageusement par vissage du dispositif d'absorption 1 sur cette partie inférieure de volet V.

Ce dispositif d'absorption 1, par sa résistance mécanique et ses capacités d'absorption d'énergie lors d'un choc, protège le volet contre les conséquences de ce choc quand celui-ci n'est pas trop important. Le dispositif d'absorption de choc 1 comprend un bandeau de réparabilité 2, appelé aussi peau, qui constitue la façade de ce dispositif. Ce bandeau 2 est, en général, en plastique et présente une faible résistance mécanique, son rôle étant plutôt esthétique que de renforcement. Il recouvre une pièce 3 formant, conformément à la présente invention, simultanément l'armature de volet V et le renfort pour le dispositif d'absorption 1.

Comme il est à éviter que cette pièce 3 soit endommagée, selon la présente invention, il est prévu que le dispositif d'absorption 1 présente au moins un élément d'absorption 4. Si à la figure 1, seul un élément d'absorption 4 est représenté dans le tronçon, cela n'est en général pas le cas pour le dispositif d'absorption 1 qui comprend, préférentiellement, plusieurs de ces éléments 4.

L'élément d'absorption 4 peut être fixé de manière amovible sur la pièce unique 3 formant armature et renfort à une de ses extrémités, l'autre extrémité opposée pointant vers le bandeau 2.

Le fonctionnement du dispositif d'absorption 1 est le suivant : en cas de choc arrière, le bandeau 2 subit une déformation. Ce bandeau 2 déformé vient s'appuyer sur l'élément d'absorption 4 et celui-ci absorbe l'énergie du choc sans venir déformer la pièce 3 formant armature du volet V. Le ou les éléments d'absorption 4 subissent ainsi la plus grande partie de l'énergie lors d'un choc et sont avantageusement facilement remplaçables quand détériorés.

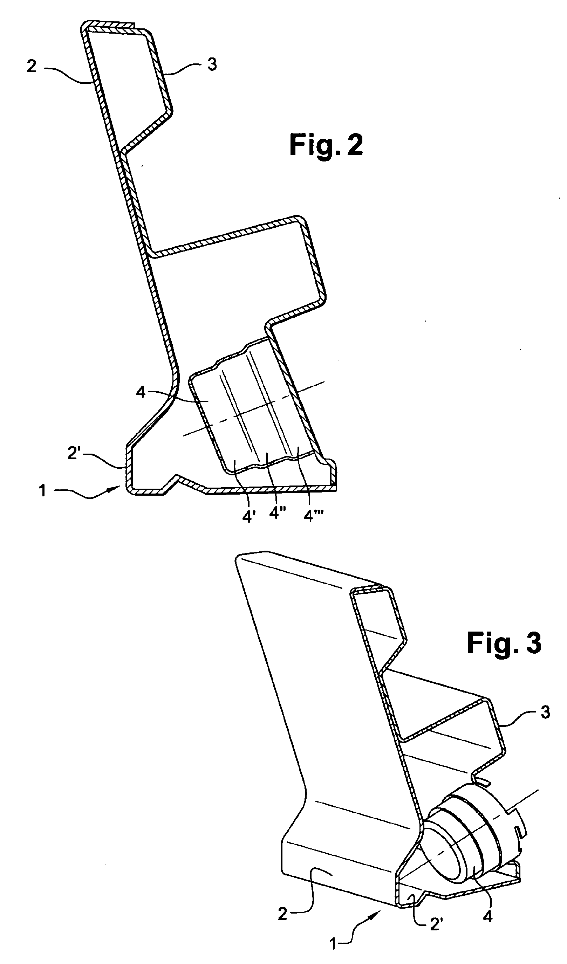

Les figures 2 et 3 montrent plus précisément les caractéristiques des divers éléments du dispositif d'absorption 1.

L'élément d'absorption 4 peut être en tout matériau approprié présentant des caractéristiques d'absorption d'énergie adaptées, par exemple, en caoutchouc ou en matière plastique déformable, notamment en thermoplastique injecté ou expansé, par exemple en polypropylène expansé. Il peut être de forme ronde ou rectangulaire et peut être facilement fixé sur ou retiré de la pièce 3 d'armature et de renfort en se fixant par exemple par vissage sur cette pièce 3. D'autres moyens de fixation sont aussi possibles comme par clippage, ou fixation par rotation de moyens de liaison.

Cet ou ces éléments 4 d'absorption sont, préférentiellement, disposés à la partie inférieure de la pièce 3 formant armature et renfort.

Lors d'un choc, le bandeau 2 appuie sur cet ou ces éléments d'absorption qui sont alors enfoncés vers la pièce 3.

Il est avantageux que la capacité d'absorption de choc de l'élément d'absorption 4 croisse au fur et à mesure de son enfoncement lors d'un choc.

Ceci peut être obtenu par un élément d'absorption 4 constitué de plusieurs parties superposées 4', 4", 4"', les dimensions de ces parties 4', 9", 4"' diminuant en s'éloignant de la pièce 3 formant renfort et armature du volet V. Ces parties superposées 4', 4", 4"' s'écrasent l'une après l'autre lors d'un choc et selon l'importance de celui-ci.

Les parties superposées 4', 4", 4"' peuvent aussi être de section rectangulaire ou circulaire et sont avantageusement au nombre de trois, sans que cela soit exclusif.

La capacité d'absorption de choc de ces parties superposées 4', 4", 4"' peut être déterminée selon le type de véhicule automobile. Cette capacité d'absorption de choc peut dépendre de l'épaisseur des différentes parties superposées.

Avantageusement, le bandeau 2 de réparabilité, s'écarte en direction longitudinale du véhicule de la pièce 3 formant armature et renfort, quand celle-ci porte l'élément d'absorption 4. Cela est montré aux figures par la partie 2' de ce bandeau 2.

L'invention concerne aussi un volet hybride arrière de véhicule automobile, comportant à sa partie inférieure un dispositif d'absorption de choc.

L'invention n'est nullement limitée au mode de réalisation décrit et illustré qui n'a été donné qu'à titre d'exemple.

## Revendications

1. Volet (V) arrière hybride de véhicule automobile comportant un dispositif d'absorption de choc (1) présentant un bandeau (2) de réparabilité formant la partie externe de ce dispositif (1), au moins un élément de renfort et une armature de volet (V) fixée vers la partie inférieure de ce volet (V), **caractérisé en ce que** l'élément de renfort et l'armature forment une pièce unique (3), au moins un élément d'absorption (4) étant disposé entre cette pièce unique (3) et le bandeau (2) de réparabilité.

2. Volet (V) selon la revendication 1, **caractérisé en ce que** l'élément d'absorption (4) est fixé de manière amovible sur la pièce unique (3) formant armature et renfort à une de ses extrémités, l'autre extrémité opposée pointant vers le bandeau (2).

3. Volet (V) selon la revendication 1 ou 2, **caractérisé en ce que** l'élément d'absorption (4) est en matière déformable, notamment en plastique ou en caoutchouc.

4. Volet (V) selon la revendication précédente, **caractérisé en ce que** la capacité d'absorption de choc de l'élément d'absorption (4) croît au fur et à mesure de son enfoncement lors d'un choc.

5. Volet (V) selon l'une quelconque des revendications précédentes, **caractérisé en ce que** l'élément d'absorption (4) est constitué de plusieurs parties (4', 4", 4"') superposées, les dimensions de ces parties (4', 4", 4"') diminuant en s'éloignant de la pièce unique (3) formant armature et renfort.

6. Volet (V) selon la revendication précédente, **caractérisé en ce que** les parties superposées (4', 4", 4"') sont de section rectangulaire ou circulaire.

7. Volet (V) selon l'une quelconque des revendications 5 ou 6, **caractérisé en ce que** les parties superposées (4', 4", 4"') sont au nombre de trois.

8. Volet (V) selon l'une quelconque des revendications précédentes, **caractérisé en ce que** le bandeau (2) de réparabilité, s'écarte, en direction longitudinale du véhicule, de la pièce unique (3) formant armature et renfort à l'endroit où celle-ci porte l'élément d'absorption (4).

9. Volet (V) selon l'une quelconque des revendications précédentes, **caractérisé en ce qu'**au moins un élément d'absorption (4) est disposé à la partie inférieure de la pièce unique (3) formant armature et renfort.

10. Volet (V) selon l'une quelconque des revendications précédentes, **caractérisé en ce qu'**il est fixé de manière amovible sur le volet (V).

## Claims

1. A hybrid rear flap (V) of a motor vehicle, comprising a shock absorption device (1), having a repairability band (2) forming the external part of this device (1), at least one reinforcement element and a flap (V) armature fixed towards the lower part of this flap (V), **characterized in that** the reinforcement element and the armature form a single piece (3), at least one absorption element (4) being arranged between this single piece (3) and the repairability band (2).

2. The flap (V) according to Claim 1, **characterized in that** the absorption element (4) is fixed in a detachable manner on the single piece (3) forming an armature and reinforcement at one of its ends, the other, opposite, end pointing towards the band (2).

3. The flap (V) according to Claim 1 or 2, **characterized in that** the absorption element (4) is of deformable material, in particular of plastic or of rubber.

4. The flap (V) according to the preceding claim, **characterized in that** the shock absorption capacity of the absorption element (4) increases in the course of its compression in the case of a shock.

5. The flap (V) according to any one of the preceding claims, **characterized in that** the absorption element (4) is constituted by several superimposed parts (4', 4", 4"'), the dimensions of these parts (4', 4", 4"') reducing the further they are from the single piece (3) forming an armature and reinforcement.

6. The flap (V) according to the preceding claim, **characterized in that** the superimposed parts (4', 4", 4"') are of rectangular or circular section.

7. The flap (V) according to any one of Claims 5 or 6, **characterized in that** the superimposed parts (4', 4", 4"') are three in number.

8. The flap V according to any one of the preceding claims, **characterized in that** the repairability band (2) diverges, in the longitudinal direction of the vehicle, from the single piece (3) forming an armature and reinforcement at the site where the latter carries the absorption element (4).

9. The flap (V) according to any one of the preceding claims, **characterized in that** at least one absorption element (4) is arranged on the lower part of the single piece (3) forming an armature and reinforcement.

10. The flap (V) according to any one of the preceding claims, **characterized in that** it is fixed in a detachable manner on the flap (V).

## Patentansprüche

1. Hybridheckklappe (V) eines Kraftfahrzeugs, die eine Stoßabsorptionsvorrichtung (1) aufweist, die ein Reparaturfähigkeitsband (2) aufweist, das den äußeren Teil dieser Vorrichtung (1) bildet, mindestens ein Verstärkungselement und eine Bewehrung der Klappe (V), die zu dem unteren Teil dieser Klappe (V) befestigt ist, **dadurch gekennzeichnet, dass** das Verstärkungselement und die Bewehrung einen einzigen Teil (3) bilden, wobei mindestens ein Absorptionselement (4) zwischen diesem einzigen Teil (3) und dem Reparaturfähigkeitsband (2) angeordnet ist.

2. Klappe (V) nach Anspruch 1, **dadurch gekennzeichnet, dass** das Absorptionselement (4) abnehmbar auf dem einzigen Teil (3), der die Bewehrung und die Verstärkung bildet, an einem seiner Enden befestigt ist, wobei das entgegen gesetzte Ende zu dem Band (2) zeigt.

3. Klappe (V) nach Anspruch 1 oder 2, **dadurch gekennzeichnet, dass** das Absorptionselement (4) aus verformbarem Material besteht, insbesondere aus Plastik oder aus Kautschuk.

4. Klappe (V) nach dem vorhergehenden Anspruch, **dadurch gekennzeichnet, dass** die Stoßabsorptionskapazität des Absorptionselements (4) bei seinem Eindrücken bei einem Aufprall allmählich zunimmt.

5. Klappe (V) nach einem der vorhergehenden Ansprüche, **dadurch gekennzeichnet, dass** das Absorptionselement (4) aus mehreren übereinander gelagerten Teilen besteht (4', 4", 4"') besteht, wobei sich die Maße dieser Teile (4', 4", 4"') mit der Entfernung von dem einzigen Teil (3), der die Bewehrung und die Verstärkung bildet, verringern.

6. Klappe (V) nach dem vorhergehenden Anspruch, **dadurch gekennzeichnet, dass** die übereinander gelagerten Teile (4', 4", 4"') rechteckigen oder kreisförmigen Querschnitt haben.

7. Klappe (V) nach einem der Ansprüche 5 oder 6, **dadurch gekennzeichnet, dass** die übereinander gelagerten Teile (4', 4", 4"') insgesamt drei sind.

8. Klappe (V) nach einem der vorhergehenden Ansprüche, **dadurch gekennzeichnet, dass** sich das Reparaturfähigkeitsband (2) von dem einzigen Teil (3), der die Bewehrung und die Verstärkung bildet, an der Stelle, an der dieser das Absorptionselement (4) trägt, in Längsrichtung des Fahrzeugs abspreizt.

9. Klappe (V) nach einem der vorhergehenden Ansprüche, **dadurch gekennzeichnet, dass** mindestens ein Absorptionselement (4) am unteren Teil des einzigen Teils (3), der die Bewehrung und die Verstärkung bildet angeordnet ist.

10. Klappe (V) nach einem der vorhergehenden Ansprüche, **dadurch gekennzeichnet, dass** sie abnehmbar auf der Klappe (V) befestigt ist.
